# EUROPEAN PATENT APPLICATION

(11) **EP 4 177 790 A1**
(43) Date of publication of application: **10.05.2023**
(21) Application number: 21852338.9
(22) Date of filing: 11.06.2021
(51) Int. Cl.: G06K 9/00

(54) **MAP CREATION METHOD AND APPARATUS FOR SELF-MOVING DEVICE, AND DEVICE AND STORAGE MEDIUM**

(30) Priority: 03.08.2020 CN 202010766273
(71) Applicant: Dreame Innovation Technology (Suzhou) Co., Ltd., Suzhou, Jiangsu 215104 (CN)
(72) Inventor: CHANG, Xinwei, Suzhou, Jiangsu 215104 (CN)
(74) Representative: dompatent von Kreisler Selting Werner - Partnerschaft von Patent- und Rechtsanwälten mbB
(86) International application number: PCT/CN2021/099723
(87) International publication number: WO 2022/028110

(57) **Abstract**

A map creation method and apparatus for a self-moving device, and a device and a storage medium, belonging to the technical field of computers. The method comprises: acquiring a first image collected by a self-moving device at a working area in which the self-moving device moves (201), wherein the first image is an image of the top of the working area; extracting a target feature according to the first image, wherein the target feature is used to indicate a first plane directly above the self-moving device (202); determining an area contour of the working area on the basis of the target feature (203); and on the basis of the area contour and first position information of the self-moving device in the working area, generating an area map of the working area (204). By means of the method, the house contour acquisition efficiency can be improved, thereby improving the area map generation efficiency.

## Description

### TECHNICAL FIELD

The present application relates to a method, an apparatus, a device and a storage medium for creating a map for a self-moving device, which belongs to the technical field of computers.

### BACKGROUND

With the development of technology of smart devices, self-moving devices have the ability to build maps. A self-moving device may be a self-moving device capable of self-moving and capable of completing one or more tasks. The one or more tasks may be, for example, sweeping, mopping, mowing, delivering meals, or the like. The self-moving device, such as a cleaning robot, can create an area map of a working area based on area images captured by a camera during a work process. The area map is a map of the working area where the self-moving device is located.

In the related art, a method of creating an area map for a self-moving device includes: during the movement of the self-moving device, creating the area map of a working area by controlling the self-moving device to move along an edge of the working area.

However, when the self-moving device creates the area map, it needs to control the self-moving device to move along the edge of the working area, and the map creation is less efficient.

### SUMMARY

The present application provides a method, an apparatus, a device and a storage medium for creating a map for a self-moving device, which can solve the problem that the self-moving device needs to be controlled to move along an edge of a working area when creating the map for the self-moving device, resulting in low map creation efficiency. The present application provides the following technical solutions:

In a first aspect, a method for creating a map for a self-moving device is provided. The method includes:
acquiring a first image captured by the self-moving device in a working area in which the self-moving device moves, the first image being an image above the working area;
extracting a target feature according to the first image, the target feature being configured to indicate a first plane directly above the self-moving device;
determining an area contour of the working area based on the target feature; and
generating an area map of the working area based on the area contour and first position information of the self-moving device in the working area.

Optionally, the target feature includes a straight line feature and/or a wall corner feature; determining the area contour of the working area based on the target feature, includes:
determining the first plane, the second plane connected to the first plane, and a plane intersection of the first plane and the second plane, based on the straight line feature and/or the wall corner feature; and
determining an area contour of the working area based on the plane intersection.

Optionally, the method further includes:
acquiring edge information of the second plane when it is determined that there is a first obstacle in the second plane, the first obstacle being an object proximate the second plane and proximate a surface of the working area; and
adjusting the area contour of the working area according to the edge information of the second plane.

Optionally, the target feature further includes an object feature of a target object, the target object is an object disposed above the working area; determining the first plane, the second plane connected to the first plane, and the plane intersection of the first plane and the second plane, based on the straight line feature and/or the wall corner feature, includes:
determining the first plane based on the object feature; and
determining the second plane connected to the first plane and the plane intersection of the first plane and the second plane, based on the first plane in combination with the straight line feature and/or the wall corner feature.

Optionally, before generating the area map of the working area based on the area contour and the first position information of the self-moving device in the working area, the method further includes:
determining a relative positional relationship between the self-moving device and the target object, based on the first image; and
obtaining the first position information of the self-moving device in the working area, based on the relative positional relationship between the self-moving device and the target obj ect.

Optionally, the method further includes:
generating a target map based on the area map corresponding to each of the one or more working areas.

Optionally, the method further includes:
identifying a second obstacle in the working area;
acquiring second position information of the second obstacle in the working area; and
marking the second obstacle in the area map according to the second position information.

In a second aspect, an apparatus for creating a map for a self-moving device is provided. The apparatus includes:
an acquisition module, configured to acquire a first image captured by the self-moving device in a working area in which the self-moving device moves, the first image being an image above the working area;
an extraction module, configured to extract a target feature according to the first image, the target feature being configured to indicate a first plane directly above the self-moving device;
a determining module, configured to determine an area contour of the working area based on the target feature; and
a map generation module, configured to generate an area map of the working area based on the area contour and first position information of the self-moving device in the working area.

In a third aspect, a self-moving device is provided and includes:
an image acquisition component configured to acquire images; and
a processing component configured to:
acquire a first image captured by the image acquisition component in a working area, the working area being an area in which the self-moving device moves, the first image being an image of an upper area of the self-moving device;
extract a target feature according to the first image, the target feature being configured to indicate a first plane of the upper area, the first plane being a plane above the self-moving device;
determine an area contour of the working area based on the target feature; and
generate an area map of the working area based on the area contour and first position information of the self-moving device in the working area.

In a fourth aspect, a computer-readable storage medium is provided, wherein a program is stored in the storage medium, and the program is executed by a processor to implement the method for creating the map for the self-moving device according to the first aspect.

In the embodiments of the present application, by acquiring the first image captured by the self-moving device in the working area in which the self-moving device moves; by extracting the target feature according to the first image, the target feature being configured to indicate the first plane directly above the self-moving device; by determining the area contour of the working area based on the target feature; and by generating the area map of the working area based on the area contour and first position information of the self-moving device in the working area, the present application can solve the problem that the self-moving device needs to be controlled to move along the edge of the working area when creating the area map for the self-moving device, resulting in low map creation efficiency. Since a house contour is determined according to the first image, there is no need to control the self-moving device to move to the edge of the working area, the present application can improve the acquisition efficiency of the house contour, thereby improving the map generation efficiency.

The above description is only an overview of technical solutions of the present application. In order to have a clearer understanding of the technical means of the present application and to implement them in accordance with the contents of the specification, the following detailed description is given with reference to the preferred embodiments of the present application and the accompanying drawings.

### BRIEF DESCRIPTION OF DRAWINGS

FIG. 1 is a schematic structural view of a self-moving device provided by an embodiment of the present application;
FIG. 2 is a flowchart of a method for creating a map for a self-moving device provided by an embodiment of the present application;
FIG. 3 is a block diagram of an apparatus for creating a map for a self-moving device provided by an embodiment of the present application; and
FIG. 4 is a block diagram of an apparatus for creating a map for a self-moving device provided by an embodiment of the present application.

### DETAILED DESCRIPTION

The specific embodiments of the present application will be described in further detail below with reference to the accompanying drawings and implementations. The following examples are used to illustrate the present application, but are not intended to limit the scope of the present application.

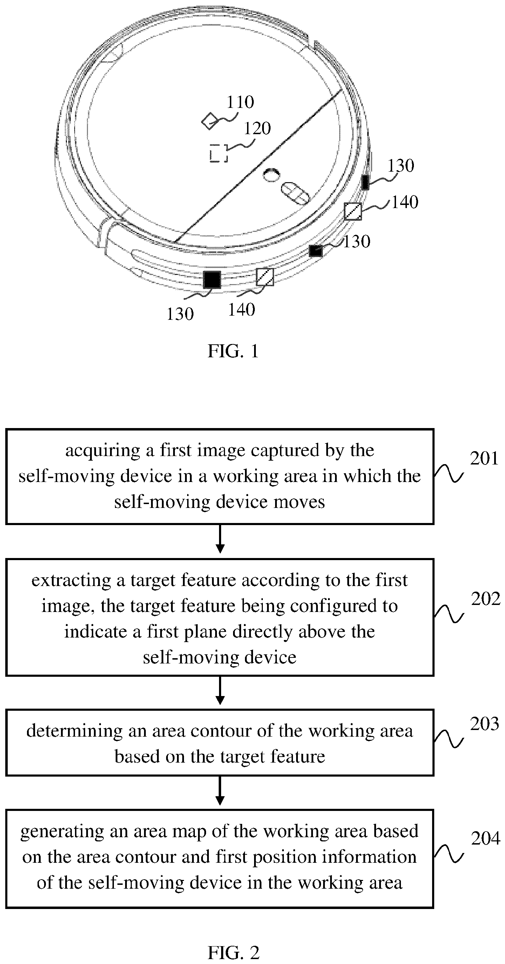

FIG. 1 is a schematic structural view of a self-moving device provided by an embodiment of the present application. The self-moving device may be a device with an automatic moving function, such as a sweeping robot, a mopping robot, and the like. In the embodiment of the present application, a working area where the self-moving device is located is an area with a roof, such as a house, a garage, and the like. As shown in FIG. 1, the self-moving device at least includes: a first image acquisition component 110 installed on the self-moving device and a control component 120 communicatively connected to the first image acquisition component 110.

An acquisition range of the first image acquisition component 110 includes an area above the self-moving device. In this way, when the self-moving device works in the working area, the first image acquisition component 110 can acquire an image above the working area so as to obtain a first image. The working area is an area in which the self-moving device moves. For example, if the working area is a house, the first image acquisition component 110 can acquire an image of a roof of the house.

The first image acquisition component 110 may be implemented as a camera, a video camera, or the like. The number of the first image acquisition components 110 may be one or more. This embodiment does not limit the type and quantity of the first image acquisition component 110.

The control component 120 is configured to: acquire a first image captured by the self-moving device in the working area in which the self-moving device moves; extract a target feature according to the first image; determine an area contour of the working area based on the target feature; and generate an area map of the working area based on the area contour and first position information of the self-moving device in the working area.

Wherein, the target feature is configured to indicate the first plane directly above the self-moving device. In one example, the target feature include: a straight line feature and/or a wall corner feature. In another example, the target feature may further include an object feature of a target object in addition to the straight line feature and/or the wall corner feature. The target object is an object disposed above the working area. The target object may be a chandelier, a ceiling lamp, a hanging cabinet, and/or a ceiling fan, etc. This embodiment does not limit the type of the target object. The object feature of the target object may be a feature vector and/or attribute information obtained through an image recognition algorithm, and this embodiment does not limit the content of the object feature.

The area map is a map of the working area. Optionally, the area map may be a two-dimensional map or a three-dimensional map, and the type of the area map is not limited in this embodiment.

Optionally, the self-moving device may further include a proximity sensor 130 and/or a second image acquisition component 140. The proximity sensor 130 and/or the second image acquisition component 140 are configured for sensing obstacles in the working area. The obstacles include a first obstacle and/or a second obstacle. The first obstacle refers to an object close to the second plane and a surface of the working area, such as a hanging cabinet, a bed, an air conditioner, and the like. The second obstacle refers to an object that the self-moving device comes into contact with when moving in the working area, such as a bed, a sofa, a cabinet, and the like. Correspondingly, the control component 120 may be configured to receive obstacle-related information in the working area; and perform corresponding processing according to the obstacle-related information. The obstacle-related information includes, but is not limited to: proximity information collected by the proximity sensor 130 and/or image information collected by the second image acquisition component 140. In one example, the control component 120 determines whether the first obstacle exists in the second plane according to the obstacle-related information. In the case where the first obstacle exists in the second plane, edge information of the second plane is acquired. According to the edge information of the second plane, an area contour of the working area is adjusted. In another example, the control component 120 identifies the second obstacle in the working area based on the obstacle-related information, acquires second position information of the second obstacle in the working area; and mark the second obstacle in the area map according to the second position information.

The obstacle-related information may further include image information collected by the first image acquisition component 110, and the content of the obstacle-related information is not limited in this embodiment.

An acquisition range of the second image acquisition component 140 may include a plane on which the self-moving device is moved, such as a ground of the working area.

In addition, in the present embodiment, the control component 120 is installed in the self-moving device as an example for description. In actual implementation, the control component 120 may also be implemented in other devices, such as a mobile phone, a tablet computer, a computer and other user terminals. This embodiment does not limit the implementation of the control component 120.

In this embodiment, by acquiring the first image captured by the self-moving device in the working area where it moves, by extracting the target feature from the first image, by determining the house contour according to the target feature, and by generating the area map of the working area according to the house contour and the first position information of the self-moving device in the working area, the present application does not need to move the self-moving device to the edge of the working area to obtain the house contour, which can improve the efficiency of obtaining the house contour, thereby improving the efficiency of map generation.

FIG. 2 is a flowchart of a method for creating a map for a self-moving device provided by an embodiment of the present application. This embodiment is described by taking as an example that the method is applied to the self-moving device shown in FIG. 1, and the execution subject of each step is the control component 120 in the self-moving device. The method includes at least the following steps:

Step 201, acquiring a first image captured by the self-moving device in a working area in which the self-moving device moves.

The first image is an image above the working area. Optionally, the control component 120 may acquire one or more first images. In a possible embodiment, the working area may be a room, and the room may be a living room, a bedroom, a kitchen, a bathroom, or the like.

Step 202, extracting a target feature according to the first image, the target feature being configured to indicate a first plane directly above the self-moving device.

Optionally, the self-moving device may perform image processing on the first image to extract the target feature. In a possible embodiment, the self-moving device may perform image processing on the first image through a neural network model.

In one example, the target feature include a straight line feature and/or a wall corner feature. The self-moving device may process the first image using an image recognition algorithm to determine whether the first image includes the straight line feature and/or the wall corner feature. Since the straight line feature on the roof of the working area is usually an intersection between a first plane and a second plane, the wall corner feature on the roof is usually a corner formed by the meeting of the first plane and at least one second plane. Therefore, by extracting the straight line feature and/or the wall corner feature in the first image, the first plane and the second plane connected to the first plane can be determined.

In another example, the target feature include not only the straight line feature and/or the wall corner feature, but also the object feature of the target object. The target object is an object disposed above the working area. The target object may be a chandelier, a ceiling lamp, a hanging cabinet, and/or a ceiling fan, etc. This embodiment does not limit the type of the target object. Since the target object is usually installed on the roof of the working area, the first plane of the working area can be determined by the object feature of the target object, and the first plane, the second plane connected to the first plane, and a plane intersection of the first plane and the second plane can be determined, based on the straight line feature and/or the wall corner feature. For example, if the working area is a house, the image (i.e., the first plane) of the roof of the house can be determined by the object feature of the target object. The image of the wall adjacent to the roof (i.e., the second plane), and a plane intersection between the image of the roof and the image of the wall can be determined by the image of the roof in combination with the straight line feature and/or the wall corner feature.

Step 203, determining an area contour of the working area based on the target feature.

The target feature includes a straight line feature and/or a wall corner feature. Determining the area contour of the working area based on the target feature, includes: determining the first plane, the second plane connected to the first plane, and a plane intersection of the first plane and the second plane, based on the straight line feature and/or the wall corner feature; and determining an area contour of the working area based on the plane intersection.

In one example, the target feature also include an object feature of a target object. The target object is an object disposed above the working area. At this time, determining the first plane, the second plane connected to the first plane, and the plane intersection of the first plane and the second plane, based on the straight line feature and/or the wall corner feature, incudes: determining the first plane based on the object feature; and determining a second plane connected to the first plane, and a plane intersection line between the first plane and the second plane, based on the first plane in combination with the straight line feature and/or the wall corner feature.

In other embodiments, the first plane may also be determined based on the straight line feature and/or the wall corner feature. For example, the first plane is obtained by connecting lines corresponding to the straight line feature; or, splicing lines that make up the wall corner feature are extended to get the plane intersection, and then the intersecting lines of the planes are connected to obtain the first plane and the second plane; or the straight line feature and the wall corner feature are combined to determine the first plane, the second plane, and the plane intersection. This embodiment does not limit the manner of determining the first plane.

Since there may be a first obstacle on the second plane connected to the first plane, such as a cabinet, a sofa or a bed placed close to the second plane, in this case, the plane connected to the first plane may include a surface of the first obstacle. Based on this, when it is determined that there is the first obstacle in the second plane, edge information of the second plane is acquired; and an area contour of the working area is adjusted according to the edge information of the second plane. Wherein, the first obstacle is an object close to the second plane and close to the surface of the working area. In the embodiment of the present application, when the first obstacle exists on the second plane, the area contour is adjusted according to the edge information of the second plane, so that the area map can more accurately reflect the actual contour of the working area, and the accuracy of the area map can be improved. For example, if the working area is a house, and there are obstacles such as a cabinet, a sofa, or a bed close to a wall, the edge information of the side including the cabinet, the sofa, or the bed that are far away from the wall can be obtained, and the area contour can be adjusted according to the edge information.

Optionally, manners to acquire edge information of the second plane include but are not limited to the following:
a first manner: when the self-moving device drives along an edge of the second plane, acquire the edge information of the second plane;
a second manner: receiving the edge information of the second plane input by a user.

The manner of acquiring the edge information of the second plane may also be other manners, which are not listed one by one in this embodiment.

Step 204, generating an area map of the working area based on the area contour and first position information of the self-moving device in the working area.

Before generating the area map of the working area based on the area contour and the first position information of the self-moving device in the working area, the method further includes: acquire the first position information of the self-moving device in the working area.

Optionally, when the target feature includes the object feature of the target object, acquiring the first position information of the self-moving device in the working area, includes: determining a relative positional relationship between the self-moving device and the target object, based on the first image; and obtaining the first position information of the self-moving device in the working area, based on the relative positional relationship between the self-moving device and the target object.

Optionally, the relative positional relationship includes a distance and an angle between the self-moving device and the target object. In a possible embodiment, the self-moving device determines the relative positional relationship between the self-moving device and the target object based on the similar triangle principle.

Optionally, a positioning component is installed on the self-moving device. The positioning component is configured to position the location of the self-moving device in the working area. At this time, when the self-moving device collects the first image, the positioning information obtained by the positioning component is acquired, and the first position information of the self-moving device in the working area is obtained.

In other embodiments, other manners may also be configured to acquire the first position information of the self-moving device, such as: determining the first position information according to the distance information between the self-moving device and the wall corner indicated by the wall corner feature. This embodiment does not limit the manner of acquiring the first position information of the self-moving device.

In a possible embodiment, a device image of the self-moving device is displayed at the position indicated by the first position information in the area contour to obtain the area map.

Optionally, after obtaining the area map, the target map is generated based on the area map corresponding to each of the one or more working areas.

Illustratively, when one working area is provided, generating the target map based on the area map corresponding to one working area, includes: using the area map corresponding to the working area as the target map. In a possible embodiment, the area map corresponding to the working area can used as the target map after preset processing is performed. The preset processing may be processing such as beautification, marking the type of working area, and the like, and the preset processing is not limited in this embodiment.

Illustratively, when multiple working areas are provided, generating the target map based on the area map corresponding to each working area, includes: splicing each area map according to the corresponding map posture to obtain the target map. The map posture includes the orientation and location of the area map.

In summary, by acquiring the first image captured by the self-moving device in the working area in which the self-moving device moves; by extracting the target feature according to the first image, the target feature being configured to indicate the first plane directly above the self-moving device; by determining the area contour of the working area based on the target feature; and by generating the area map of the working area based on the area contour and first position information of the self-moving device in the working area, the method for creating the map for the self-moving device provided by this embodiment of the present application can solve the problem that the self-moving device needs to be controlled to move along the edge of the working area when creating the area map for the self-moving device, resulting in low map creation efficiency. Since the house contour is determined according to the first image, there is no need to control the self-moving device to move to the edge of the working area, the present application can improve the acquisition efficiency of the house contour, thereby improving the map generation efficiency.

Optionally, based on the foregoing embodiment, after the step 204, the method further includes: identifying a second obstacle in the working area; acquiring second position information of the second obstacle in the working area; and marking the second obstacle in the area map according to the second position information.

The manners of acquiring the second position information of the second obstacle in the working area, include but are not limited to the following:

A first manner: a proximity sensor is installed on the self-moving device. The proximity sensor is configured to sense an object approaching the self-moving device within a preset range. When the self-moving device receives a proximity signal fed back by the proximity sensor, a proximity distance between the self-moving device and the second obstacle is obtained according to the proximity signal. Based on the first position information and the proximity distance from the self-moving device, second position information of the second obstacle is determined.

Optionally, the proximity distance between the self-moving device and the second obstacle is determined by the difference between the signal strength of a detection signal sent by the proximity sensor and the signal strength of a reflected signal of the detection signal from the self-moving device.

Optionally, a second image acquisition component is also installed on the self-moving device. In the case of receiving the proximity signal sent by the proximity sensor, the second image acquisition component is controlled to acquire an obstacle image, and perform image processing on the obstacle image to obtain a processing result of the obstacle image. The processing result may include the proximity distance between the self-moving device and the second obstacle.

The processing result may also include other information, including but not limited to, the size of the obstacle, the type of the obstacle, and the position of the obstacle. In this way, the position and shape of the second obstacle in the area map can be determined.

A second manner: a second image acquisition component is installed in the self-moving device. The self-moving device collects an environment image through the second image acquisition component, and performs image processing on the environment image. In the case where the environment image includes an image of an obstacle, a processing result of the obstacle image is obtained. The processing result may include a proximity distance between the self-moving device and the second obstacle.

Wherein, the self-moving device can use a pre-trained image recognition model for image processing. The image recognition model can be trained based on a neural network model.

In this embodiment, by identifying the obstacle in the working area and determining the second position information of the obstacle in the area map, the self-moving device does not need to identify obstacles again in the subsequent work process, and can adaptively adopt corresponding work strategies according to the types of obstacles, thereby improving work efficiency.

Optionally, based on the foregoing embodiment, after the step 204, the method further includes: determining a worked area of the self-moving device in the working area from according to the first position information.

In this embodiment, by determining the worked area in the working area, it can be ensured that the self-moving device will not perform repeated work on the worked area, thereby improving the work efficiency of the self-moving device.

Optionally, in each of the above embodiments, the self-moving device may be communicatively connected to a user terminal. The self-moving device can send one or more pieces of information among the area map, the target map, the identification result of the obstacle, the determination result of the working area, etc., to the user terminal for display by the user terminal.

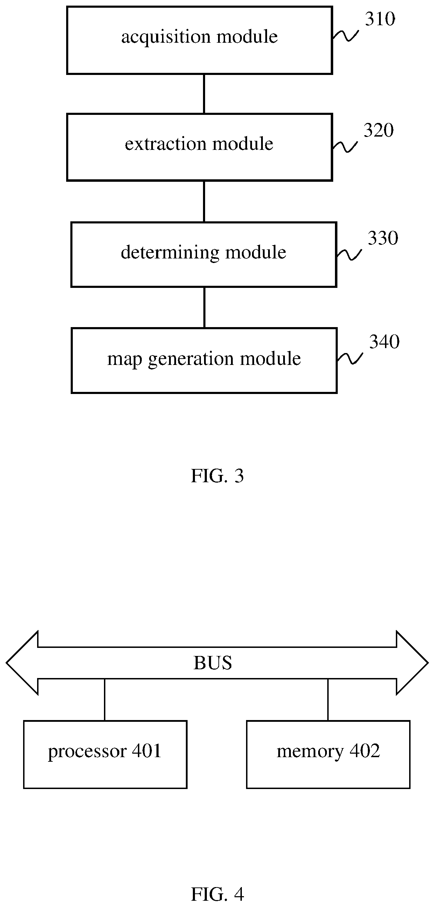

FIG. 3 is a block diagram of an apparatus for creating a map for a self-moving device provided by an embodiment of the present application. This embodiment is described by taking the device applied to the self-moving device shown in FIG. 1 as an example. The apparatus at least includes the following modules: an acquisition module 310, an extraction module 320, a determining module 330 and a map generation module 340.

The acquisition module 310 is configured to acquire a first image captured by the self-moving device in a working area in which the self-moving device moves, the first image being an image above the working area.

The extraction module 320 is configured to extract a target feature according to the first image, the target feature being configured to indicate a first plane directly above the self-moving device;

The determining module 330 is configured to determine an area contour of the working area based on the target feature.

The map generation module340 is configured to generate an area map of the working area based on the area contour and first position information of the self-moving device in the working area.

In a possible embodiment, the target feature includes a straight line feature and/or a wall corner feature; and the determining module 330 is further configured to:
determine the first plane, the second plane connected to the first plane, and a plane intersection of the first plane and the second plane, based on the straight line feature and/or the wall corner feature; and
determine an area contour of the working area based on the plane intersection.

In a possible embodiment, the map generation module 340 is further configured to:
acquire edge information of the second plane when it is determined that there is a first obstacle in the second plane, the first obstacle being an object proximate the second plane and proximate a surface of the working area; and
adjust the area contour of the working area according to the edge information of the second plane.

In a possible embodiment, the target feature further includes an object feature of a target object. The target object is an object disposed above the working area. The determining module 330 is also configured to:
determine the first plane based on the object feature; and
determine the second plane connected to the first plane and the plane intersection of the first plane and the second plane, based on the first plane in combination with the straight line feature and/or the wall corner feature.

In a possible embodiment, the apparatus for creating the map for the self-moving device further includes a positioning module. The positioning module is configured to:
determine a relative positional relationship between the self-moving device and the target object, based on the first image; and
obtain the first position information of the self-moving device in the working area, based on the relative positional relationship between the self-moving device and the target obj ect.

In a possible embodiment, the map generation module 340 is also configured to:
generate a target map based on the area map corresponding to each of the one or more working areas.

In a possible implementation, the apparatus for creating the map for the self-moving device further includes a marking module. The marking module is configured to:
identify a second obstacle in the working area;
acquire second position information of the second obstacle in the working area; and
mark the second obstacle in the area map according to the second position information.

For relevant details, refer to the above method embodiments.

It should be noted that: the apparatus for creating the map for a self-moving device provided in the above-mentioned embodiments is only described by taking the division of the above-mentioned functional modules as an example. In practical applications, the above-mentioned functions can be allocated to different function modules according to requirements. That is, the internal structure of the map creation apparatus from the self-moving device is divided into different functional modules to complete all or part of the functions described above. In addition, the apparatus for creating the map for the self-moving device provided by the above embodiments and the method for creating the map for the self-moving device belong to the same concept, and the specific implementation process is detailed in the method embodiment, which will not be repeated here.

FIG. 4 is a block diagram of an apparatus for creating a map for a self-moving device provided by an embodiment of the present application. The apparatus may be the self-moving device shown in FIG. 1. The apparatus includes at least a processor 401 and a memory 402.

The processor 401 may include one or more processing cores, such as a 4-core processor, a 6-core processor, and the like. The processor 401 may be implemented in at least one hardware form among DSP (Digital Signal Processing), FPGA (Field-Programmable Gate Array), and PLA (Programmable Logic Array). The processor 401 may also include a main processor and a co-processor. The main processor is a processor for processing data in a wake-up state, and is also called a CPU (Central Processing Unit). The co-processor is a low-power processor for processing data in a standby state. In some embodiments, the processor 401 may further include an AI (Artificial Intelligence) processor. This AI processor is used to process computing operations related to machine learning.

The memory 402 may include one or more computer-readable storage medium. The computer-readable storage medium may be non-transitory. The memory 402 may also include high-speed random access memory, as well as non-volatile memory, such as one or more disk storage devices, flash storage devices. In some embodiments, a non-transitory computer-readable storage medium in the memory 402 is used to store at least one instruction. The at least one instruction is used to be executed by the processor 401 to implement the method for creating the map for the self-moving device provided by the method embodiments in this application.

In some embodiments, the apparatus for creating the map for the self-moving device may also optionally include: a peripheral device port and at least one peripheral device. The processor 401, the memory 402 and the peripheral device port can be connected through a BUS or a signal line. Each peripheral device can be connected to the peripheral device port through the BUS, the signal line or a circuit board. Illustratively, the peripheral devices include, but are not limited to, radio frequency circuits, touch screens, audio circuits, and power supplies etc.

The apparatus for creating the map for the self-moving device may further include fewer or more components, which is not limited in this embodiment.

Optionally, the embodiment of the present application further provides a computer-readable storage medium in which a program is stored. The program is loaded and executed by the processor to implement the method for creating the map for the self-moving device according to the above method embodiments.

Optionally, the embodiment of the present application further provides a computer product. The computer product includes a computer-readable storage medium in which a program is stored. The program is loaded and executed by the processor to implement the method for creating the map for the self-moving device according to the above method embodiment.

The technical features of the above-described embodiments can be combined arbitrarily. For the sake of brevity, all possible combinations of the technical features in the above embodiments are not described. However, as long as there is no contradiction in the combination of these technical features, it should be regarded as the scope described in this specification.

The above-mentioned embodiments only represent several embodiments of the present application, and the descriptions thereof are relatively specific and detailed, but should not be construed as a limitation on the scope of the present patent application. It should be noted that, for those skilled in the art, several modifications and improvements can be made without departing from the concept of the present application. These all belong to the protection scope of the present application. Therefore, the scope of protection of the patent of the present application shall be subject to the appended claims.

## Claims

1. A method for creating a map for a self-moving device, **characterized by** comprising:
acquiring a first image captured by the self-moving device in a working area in which the self-moving device moves, the first image being an image above the working area;
extracting a target feature according to the first image, the target feature being configured to indicate a first plane directly above the self-moving device;
determining an area contour of the working area based on the target feature; and
generating an area map of the working area based on the area contour and first position information of the self-moving device in the working area.

2. The method according to claim 1, wherein the target feature comprises a straight line feature and/or a wall corner feature; determining the area contour of the working area based on the target feature, comprises:
determining the first plane, the second plane connected to the first plane, and a plane intersection of the first plane and the second plane, based on the straight line feature and/or the wall corner feature; and
determining an area contour of the working area based on the plane intersection.

3. The method according to claim 2, further comprising:
acquiring edge information of the second plane when it is determined that there is a first obstacle in the second plane, the first obstacle being an object proximate the second plane and proximate a surface of the working area; and
adjusting the area contour of the working area according to the edge information of the second plane.

4. The method according to claim 3, wherein acquiring the edge information of the second plane, comprises:
acquiring the edge information of the second plane when the self-moving device travels along an edge of the second plane;
or, receiving the edge information of the second plane input by an user.

5. The method according to claim 2, wherein the target feature further comprises an object feature of a target object, the target object is an object disposed above the working area; determining the first plane, the second plane connected to the first plane, and the plane intersection of the first plane and the second plane, based on the straight line feature and/or the wall corner feature, comprises:
determining the first plane based on the object feature; and
determining the second plane connected to the first plane and the plane intersection of the first plane and the second plane, based on the first plane in combination with the straight line feature and/or the wall corner feature.

6. The method according to claim 5, wherein before generating the area map of the working area based on the area contour and the first position information of the self-moving device in the working area, the method further comprises:
determining a relative positional relationship between the self-moving device and the target object, based on the first image; and
obtaining the first position information of the self-moving device in the working area, based on the relative positional relationship between the self-moving device and the target object.

7. The method according to claim 6, wherein the relative positional relationship comprises a distance and an angle between the self-moving device and the target object.

8. The method according to any one of claims 1 to 7, further comprising:
generating a target map based on the area map corresponding to each of the one or more working areas.

9. The method of any one of claims 1 to 7, further comprising:
identifying a second obstacle in the working area;
acquiring second position information of the second obstacle in the working area; and
marking the second obstacle in the area map according to the second position information.

10. The method according to any one of claims 1 to 7, further comprising: determining a worked area of the self-moving device in the working area according to the first position information.

11. An apparatus for creating a map for a self-moving device, **characterized in that** the apparatus comprises:
an acquisition module, configured to acquire a first image captured by the self-moving device in a working area in which the self-moving device moves, the first image being an image above the working area;
an extraction module, configured to extract a target feature according to the first image, the target feature being configured to indicate a first plane directly above the self-moving device;
a determining module, configured to determine an area contour of the working area based on the target feature; and
a map generation module, configured to generate an area map of the working area based on the area contour and first position information of the self-moving device in the working area.

12. The apparatus according to claim 11, wherein the target feature comprises a straight line feature and/or a wall corner feature; the determining module is further configured to:
determine the first plane, the second plane connected to the first plane, and a plane intersection of the first plane and the second plane, based on the straight line feature and/or the wall corner feature; and
determine an area contour of the working area based on the plane intersection.

13. The apparatus according to claim 12, wherein the map generation module is further configured to:
acquire edge information of the second plane when it is determined that there is a first obstacle in the second plane, the first obstacle being an object proximate the second plane and proximate a surface of the working area; and
adjust the area contour of the working area according to the edge information of the second plane.

14. The apparatus according to claim 12, wherein the target feature further comprises an object feature of a target object, the target object is an object disposed above the working area, and the determining module is also configured to:
determine the first plane based on the object feature; and
determine the second plane connected to the first plane and the plane intersection of the first plane and the second plane, based on the first plane in combination with the straight line feature and/or the wall corner feature.

15. The apparatus according to claim 11, further comprising a positioning module before the map generation module, the positioning module being configured to:
determine a relative positional relationship between the self-moving device and the target object, based on the first image; and
obtain the first position information of the self-moving device in the working area, based on the relative positional relationship between the self-moving device and the target object.

16. The apparatus according to any one of claims 11 to 15, wherein the map generation module is further configured to:
generate a target map based on the area map corresponding to each of the one or more working areas.

17. The apparatus according to any one of claims 11 to 15, further comprising a marking module configured to:
identify a second obstacle in the working area;
acquire second position information of the second obstacle in the working area; and
mark the second obstacle in the area map according to the second position information.

18. A self-moving device, **characterized by** comprising:
an image acquisition component configured to acquire images; and
a processing component configured to:
acquire a first image captured by the image acquisition component in a working area, the working area being an area in which the self-moving device moves, the first image being an image of an upper area of the self-moving device;
extract a target feature according to the first image, the target feature being configured to indicate a first plane of the upper area, the first plane being a plane above the self-moving device;
determine an area contour of the working area based on the target feature; and
generate an area map of the working area based on the area contour and first position information of the self-moving device in the working area.

19. A computer-readable storage medium, wherein a program is stored in the storage medium, and the program is executed by a processor to implement the method for creating the map for the self-moving device according to any one of claims 1 to 7.
